# EUROPÄISCHE PATENTSCHRIFT

(11) **EP 0 576 693 B1**
(45) Veröffentlichungstag und Bekanntmachung des Hinweises auf die Patenterteilung: **01.03.2000**
(21) Anmeldenummer: 92110521.9
(22) Anmeldetag: 23.06.1992
(51) Int. Cl.: B65G 1/02, A47B 96/02

(54) **Regalsystem mit eingehängten Rosten**
Shelving system with suspended grids
Système de rayonnage avec grilles suspendues

(30) Priorität: 24.06.1991 DE 4120815; 29.06.1991 DE 9108039 U; 24.06.1991 DE 9107761 U; 29.06.1991 DE 4121682
(43) Veröffentlichungstag der Anmeldung: 05.01.1994
(73) Patentinhaber: Jürgens, Walter, Dr. Ing., D-52072 Aachen (DE)
(72) Erfinder: Jürgens, Walter, Dr. Ing., D-52072 Aachen (DE)

(56) Entgegenhaltungen:
- EP-A- 0 273 345
- DE-A- 3 836 737
- DE-U- 8 014 894
- DE-U- 9 107 761
- DE-U- 9 108 039

## Beschreibung

Die Erfindung betrifft ein Regalsystem mit eingehängten Rosten, wobei die Roste aus parallel zueinander laufenden Längsprofilen bestehen, die sich über Kopfleisten an querverlaufenden Balken abstützen, und wobei die Längsprofile einen obenliegenden Rücken und sekrecht dazu verlaufende Seitenflächen aufweisen, jedoch nach unten offen ausgebildet sind.

Ein Regalsystem dieser Art ist in der DE-U-8 014 894 dargestellt. Hier liegen die rechtwinklig zu den oben liegenden Rücken der Längsprofile verlaufenden Seitenflächen mit ihren Kanten sekrecht auf Abstützflächen von Kopfleisten auf und sind mit diesen durch Schweißen verbunden. Durch das stumpfe Aufliegen der Seitenflächen auf den Abstützflächen der Kopfleisten ist bevorzugt nur ein Lichtbogenschweißverfahren zur Verbindung der Teile anwendbar. Dieses ist jedoch problematisch, da beim Lichtbogenschweißen wegen der Intensität des Lichtbogens die Schweißqualität mitunter zu wünschen übrig läßt. Auch kann es geschehen, daß das Blech durchbrennt. Zudem kann kein verzinktes Material eingesetzt werden, da das Schweißen an verzinkten Teilen stark gesundheitsgefährdend ist.

Es ist daher Aufgabe der Erfindung, eine verbesserte Verbindungsmöglichkeit der Profile mit den Kopfleisten eines gattungsgemäßen Regalsystems zu schaffen, das die geschilderten Nachteile vermeidet und ohne Lichtbogen-Schweißverbindungen eine sichere und ökonomisch zufriedenstellende dauerhafte Verbindung der genannten Teile erreicht.

Die erfindungsgemäße Aufgabe wird durch die im Hauptanspruch gekennzeichneten Merkmale erreicht. Zweckmäßige Ausgestaltungen der Erfindung ergeben sich durch die Anwendung der Merkmale der Unteransprüche.

Ausführungsbeispiele der Erfindung sind in den Figuren dargestellt.

Es zeigen:
Fig. 1 eine Ausführungsform der Erfindung in perspektivischer Darstellung;
Fig. 2 eine Einzelheit des Endstücks eines Längprofils gemäß einer Ausführungsform der Erfindung, in perspektivischer Darstellung.

In den Figuren ist ein Rost, insgesamt mit 1 bezeichnet, innerhalb eines Regalsystems 2 vorgesehen. Eine Kopfleiste 3 liegt auf einem Balken 4 auf, der selbst an einem Ständer 4a befestigt ist. Die Kopfleiste 4 besitzt einen Umbug 5, der Längsprofile 6 untergreift und trägt.

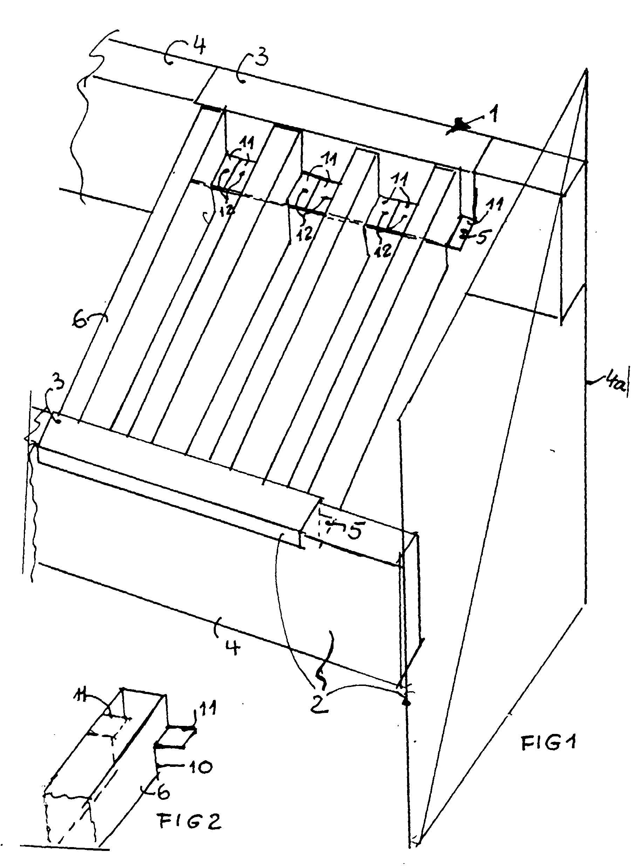

Die Enden der Längsprofile 6 sind, wie insbesondere aus der Fig. 2 hervorgeht, mit Einschnitten 10 versehen, wodurch Lappen entstehen, die durch Umbiegen um 90° zu Abbiegungen 11 werden. Mit diesen Abbiegungen liegen die Längsprofile 6 auf dem jeweiligen Umbug 5 der Kopfleiste 3 auf.

Bei der in den Fig. 1 und 2 dargestellten Ausführungsform sind die Abbiegungen 11 mit dem jeweiligen Umbug durch Punktschweißverbindungen 12 verbunden. Anstelle einer Punktschweißverbindung kann auch eine andere Verbindungsform verwendet werden, wie beispielsweise eine Niet- oder Schraubenverbindung..

Es ist auch vorteilhaft, die Abbiegungen von zwei nebeneinander angeordneten Längsprofilen 6 übereinander anzuordnen, sodaß die Verbindung mit dem Umbug nur durch ein einziges, gemeinsames Befestigungsmittel erfolgen kann.

## Patentansprüche

1. Regalsystem mit eingehängten Rosten (1), wobei die Roste aus parallel zueinander laufenden Längsprofilen (6) bestehen, die sich über Kopfleisten (3) an querverlaufenden Balken (4) abstützen, und wobei die Längsprofile (6) einen obenliegenden Rücken und senkrecht dazu verlaufende Seitenflächen aufweisen, jedoch nach unten offen ausgebildet sind, dadurch gekennzeichnet, daß die Längsprofile (6) an den Seitenflächen mit durch Einschnitte (10) erzeugbaren Abbiegungen (11) versehen sind, die aus den Seitenflächen der Längsprofile (6) herausgebogen sind und daß die Abbiegungen (11) auf jeweils einem Umbug (5) an den Kopfleisten (3) aufliegen und an diesen befestigt sind, wobei die Kopfleiste (3) an den Balken (4) des Regalsystems (2) eingehängt ist.

2. Regalsystem nach Anspruch 1, dadurch gekennzeichnet. daß die Verbindung der Abbiegung (11) mit dem Umbug (5) durch eine Punktschweißverbindung erfolgt.

3. Regalsystem nach Anspruch 1, dadurch gekennzeichnet, daß die Verbindung der Abbiegung (11) mit dem Umbug (5) durch Niet- oder Schraubenverbindungen erfolgt.

4. Regalsystem nach Anspruch 1 bis 3, dadurch gekennzeichnet, daß die Abbiegungen (11) von zwei nebeneinander liegenden Längsprofilen (6) sich überlappend angeordnet sind.

5. Regalsystem nach Anspruch 1 bis 4, dadurch gekennzeichnet, daß die Abbiegungen (11) and beiden Enden der Längsprofile (8) angeordnet sind.

## Claims

1. Shelfsystem with inhanging gratings (1) consisting of parallel situated longitudinal profiles (6), which prop themselves by head ledges (3) on cross to the longitudinal profiles situated beams (4), so that the longitudinal profiles (6) have an above situated back with rectengular to the back situated sidesheets and which are below open, marked by the fact, that the longitudinal profiles (6) at the sidesheets have by cuts generatable bends (11), which are bent out of the sidesheets of the longitudinal profiles (6) and that the bends (11) lie on each bend area (5) of each of the two headledges (3), fastened with them an that the headledges (3) are hung in into the beams (4) of the shelfs, which are hung on the beams (4) of the shelfsystem (2).

2. Shelf system according to claim 1, marked by the facts, that in the cover area of each bend (11) with the bend area (5) of the head ledge (3), spot welding connections are provided.

3. Shelf system according to claim 1, marked by the fact, that in the cover area of each bend (11) with the corresponding bend area (5) of the headledge (3) rivet- and screw connections (12) are provided and that also rivet connections are possible by beaded hooks without rivets.

4. Shelf system according to claim 1 - 3, marked by the fact, that the bends (11) of two side beyside situated longitudinal profiles (6) are situated one on the other.

5. Shelf system according to claim 1-5, marked by the fact, that the bends (11) are provided on both sides of the longitudinal profile. (6).

## Revendications

1. Le systéme d'étalage avec des grilles suspendues (1) lesquelles consistent en profils longitudinals (6) places de facon parallès lesquelles su étayent par des liteaux de tête (3) sur des poutres transversales (4) et oú les profils longitudinals (6) montrent un dos placeè en haut et des coté latérales verticales a cela, mais qui sont ouvertes par en bas rectangulaires.
Charactérisé par le fait que les profils longitudinals (6) sont sur les cotés latérales pourvues de plis (11) produits par des entailles qui sont plié en dehors des cotés latérales des profils longitudinals (6) et que le plis (11) sont posés un a un sur une courbure (5) sur les liteaux de tête (3) fixes avec illes etque le liteau de tête suspendu sur les poutres du systeme d'étalage.

2. Le systeéme d'étalage selon prétention 1 charactérisé par le fait que dans l'endroit superges de chaque pli (11) avec sa courbure specifique (5) du liteau de tête (3) des contacts, soudu par points (12) sont prévu.

3. Le systéme d'étalage selon prétention 1 charactérise par le fait que dans l'endroit superposé de chaque pli (11) avec sa courbure spécifique (5) du liteau de tête (3) des contacts, rivé e ou vissé e sont prévues.

4. Le systéme d'étalage selon prétention 1-3, charactérisé par le fait que les plis (11) des deux profiles longitudinals (6) situés un á coté de l'autre sont arrangés superposés.

5. Le systéme d'étalage selon prétention 1-4, charactérisé par le fait que les plis (11) sont prévus à toutes les deux fins des profils longitudinals (6).
